# EUROPEAN PATENT APPLICATION

(11) **EP 3 940 883 A1**
(43) Date of publication of application: **19.01.2022**
(21) Application number: 19872238.1
(22) Date of filing: 04.06.2019
(51) Int. Cl.: H01Q 1/22, H04B 1/40

(54) **HIGH-GAIN RADIO FREQUENCY FRONT-END DEVICE**

(30) Priority: 12.03.2019 CN 201920315159 U
(71) Applicant: Shenzhen Wave Telecommunications Technologies Co., Ltd, Shenzhen, Guangdong 518102 (CN)
(72) Inventor: ZHANG, Shaolin, Shenzhen, Guangdong 518102 (CN); CUI, Licheng, Shenzhen, Guangdong 518102 (CN)
(74) Representative: Appleyard Lees IP LLP
(86) International application number: PCT/CN2019/089997
(87) International publication number: WO 2020/181669

(57) **Abstract**

The present disclosure relates to a high gain radio-frequency front end apparatus, including an antenna device and a radio-frequency transceiver device. The antenna device includes a plurality of antenna array layers arranged in layers. The radio-frequency transceiver device includes a filter, a circulator, a receiver and a transmitter. The antenna array layer is connected to a filter. The filter is connected to a circulator by an optical fiber, and the circulator is connected to a receiver and a transmitter respectively by an optical fiber. Each of the RF transceivers is connected to a corresponding antenna array layer.

## Description

### CROSS-REFERENCE TO RELATED APPLICATIONS

This application claims priority to Chinese Patent Application No. 201920315159.0, filed with the Chinese Patent Office on March 12, 2019, which is incorporated by reference herein for all purposes.

### TECHNICAL FIELD

The present disclosure relates to the field of communications technologies, and in particular to a high gain RF front end apparatus.

### BACKGROUND

The antenna is an indispensable part of any radio communication system. Although the tasks to be performed by various types of radio equipment are different, the role of the antenna in the equipment is basically the same. Any radio device uses radio waves to transmit information, so there must be a device capable of radiating or receiving electromagnetic waves.

The conventional RF front end of the antenna system mainly consists of single polarization antenna and array antenna, but it mainly consists of vertical array. These antenna structures are all two-dimensional, and it is difficult to realize high gain. The traditional antenna system has the disadvantage of low communication reliability.

### SUMMARY

According to various embodiments of the present disclosure, a high gain RF front end apparatus is provided.

A high gain RF front end apparatus includes an antenna device and an RF transceiver device, the antenna device includes a plurality of stacked antenna array layers, the RF transceiver device includes a filter, a circulator, a receiver and a transmitter, the antenna array layer is connected to the filter, the filter is connected to the circulator by an optical fiber, and the circulator is connected to the receiver and the transmitter respectively by an optical fiber; and each of the RF transceivers is connected to a corresponding antenna array layer.

The details of one or more embodiments of the present application are set forth in the following accompanying drawings and descriptions. Other features, objects and advantages of this application will become apparent from the specification, drawings and claims.

### BRIEF DESCRIPTION OF THE DRAWINGS

To describe the technical solutions in the embodiments of this application or in the prior art more clearly, the following briefly introduces the accompanying drawings required for describing the embodiments or in the prior art. Apparently, the accompanying drawings in the following description are merely some embodiments of this application, and persons of ordinary skill in the art may still derive other drawings from these accompanying drawings without creative efforts.
FIG. 1 is a block diagram of a high gain RF front end apparatus according to an embodiment.
FIG. 2 is a schematic diagram of an antenna device according to an embodiment.
FIG. 3 is a schematic diagram of high gain RF front end apparatus according to an embodiment.

### DETAILED DESCRIPTION OF THE EMBODIMENTS

The following clearly and completely describes the technical solutions in the embodiments of this application with reference to the accompanying drawings in the embodiments of this application. Apparently, the described embodiments are merely some rather than all of the embodiments of this application. Based on the embodiments of this application, all other embodiments acquired by persons of ordinary skill in the art without creative efforts fall within the protection scope of this application.

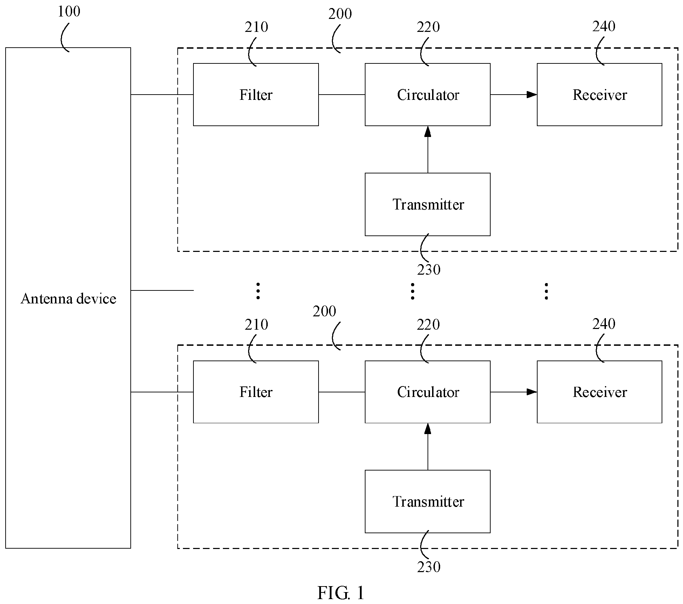

In an embodiment, a high gain RF front end apparatus is provided. As shown in FIG. 1, the apparatus includes an antenna device 100 and an RF transceiver device 200. The antenna device 100 includes a plurality of stacked antenna array layers. The RF transceiver device 200 includes a filter 210, a circulator 220, a transmitter 230, and a receiver 240. The antenna array layer is connected to the filter 210. The filter 210 is connected to the circulator 220 by an optical fiber, and the circulator 220 is connected to the receiver 240 and the transmitter 230 respectively by an optical fiber. Each of the RF transceivers is connected to a corresponding antenna array layer.

Specifically, the number of antenna array layers in the antenna device 100 is not limited, it may be two or three layers etc., and may be specifically adjusted according to actual requirements. The spacing L between the antenna array layers is at least 0.5λ, where λ is the wavelength of the center frequency of the antenna system. This ensures that the signals between the adjacent antenna arrays do not affect each other, so that the performance of the system can be improved when the antenna is configured. The connection between the antenna array layer and the filter 210 is not limited. In the present embodiment, the antenna array layer is connected to the filter 210 by an RF jumper.

Further, the quantity of antenna array layers respectively connected to each of the RF transceiver device 200 may be the same in full, in part, or may be completely different. Each of the RF transceiver devices 200 is connected to a corresponding antenna array layer to form a signal transceiver channel to form a multi-input and multi-output RF front end structure. In an embodiment, the number of antenna array layers respectively connected to each of the RF transceiver devices 200 is different from each other. For example, the number of antenna array layers connected to each of the RF transceiver devices 200 may increase one after another, and a corresponding signal transceiver channel may be selected to work according to an actual requirement, thereby improving the operation convenience of the antenna system.

In an embodiment, the antenna array layer includes a substrate and an antenna array, the antenna array is disposed on the substrate and is connected to the filter 210. The antenna array is arranged utilizing the substrate, the operation is simple and fast, and the fixing reliability is high. The material of the substrate is not unique, and may be a metal plate, a plastic plate, or the like. In the present embodiment, the substrate is a metal substrate, thereby further improving the fixing reliability of the antenna. The dimensions of the substrates in each antenna array layer may be the same or different, and may be specifically set according to actual requirements.

In addition, in an embodiment, the high gain RF front end apparatus further includes a fixing base, and a substrate is latched and fixed to the fixing base. By the fixing base, the substrate of each antenna array layer is latched and fixed, so as to facilitate disassembling and installation, and the fixing reliability is high.

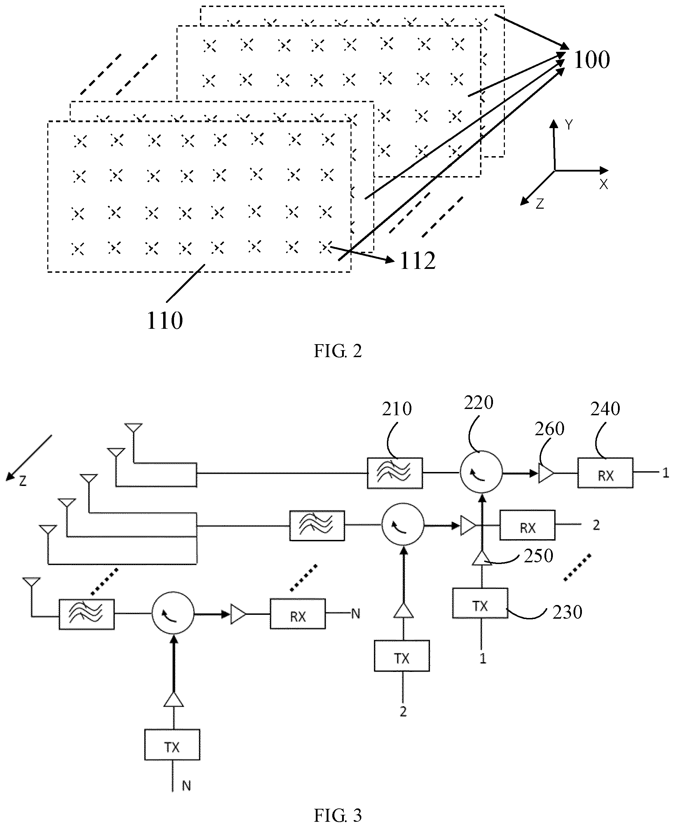

The specific type of the antenna array in the antenna array layer is also not limited. In an embodiment, the antenna array is a dual polarization planar array. Specifically, the dual polarization planar array includes a plurality of dual polarization oscillators, and the dual polarization oscillators are arranged orthogonally with positive and negative polarization of 45 degrees. As shown in FIG. 2, in the X, Y, Z coordinate axis, the dual polarization oscillators of the antenna are arranged in the X-axis, Y-axis, and Z-axis directions to form a three-dimensional array antenna structure. Each antenna array layer 110 is composed of the X0Y plane array antenna oscillators 112, and all the antenna array layers 110 are arranged reversely along the Z-axis and stacked to form a three-dimensional antenna array. By setting the multi-input and multi-output antenna RF front end of the antenna as a three-dimensional structure, the high gain RF front end apparatus can form a vertical beam, thus improving the overall gain of the antenna.

Further, in an embodiment, the antenna array layer 110 further includes a combiner, and each dual polarization oscillator in the antenna array is connected to the filter 210 in the corresponding transceiver device 200 through the combiner. The signals received by the dual polarization oscillators in the same antenna array are processed by combiner and then delivered to filter 210 for subsequent signal processing.

In an embodiment, as shown in FIG. 3, the RF transceiver 200 further includes a power amplifier 250 and a low-noise amplifier 260. The circulator 220 is connected to the low-noise amplifier 260 by an optical fiber, and the low-noise amplifier is connected to the receiver 240 by an optical fiber. The circulator 220 is connected to the power amplifier 250 by an optical fiber, and the power amplifier 250 is connected to the transmitter 230 by an optical fiber.

Specifically, for ease of explanation the antenna array layer 110 in a dashed frame in FIG. 2 is represented by a single 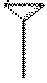 . The number of the RF transceiver device 200 is N, the first RF transceiver device 200 is connected to two antenna array layers 110, the second RF transceiver device 200 is connected to three antenna array layers 110, and so on. The Nth RF transceiver device 200 is connected to N+1 antenna array layers 110. Taking the first RF transceiver device 200 as an example, two antenna array layers 110 are connected to the filter 210. The filter 210 is connected to the power amplifier 250 and the low-noise amplifier 260 through the circulator 220. The power amplifier 250 is connected to the transmitter 230 and the low-noise amplifier 260 is connected to the receiver 240 to form a signal transmitting channel and a signal receiving channel, respectively.

In the present embodiment, the power amplifier 250 and the low-noise amplifier 260 are introduced to the signal transmitting channel and the signal receiving channel, respectively, to amplify the signal to be transmitted to improve the transmit power, and amplify the received signal for subsequent signal processing, thereby improving the communication reliability of the high gain RF front end apparatus. In addition, the devices in the RF transceiver 200 transmits the signal by the optical fibers, the signal transmission speed is fast, the loss is low, the anti-interference ability is strong, and the communication reliability of the system can be further improved.

In addition, a set of filter, circulator, low-noise amplifier, receiver, power amplifier and transmitter are configured independently for each of the RF transceiver devices 200 to form a plurality of signal transmit channels and signal receive channels, which can realize multi-beam configuration and thus extend the application range of high gain RF front end devices. Because the number of antenna array layers 110 connected to each of the RF transceiver devices 200 is different, the gain effect of each of the RF transceiver devices 200 is different. Specifically, the more the number of antenna array layers 110, the higher the gain. When used in the radar field, the multi-beam configuration of the high gain RF front end device in the present embodiment can increase the number of radar targets tracked simultaneously, effectively improve the function of a single radar, and effectively solve the problem of signal coverage among high-rise buildings.

In addition, in an embodiment, the high gain RF front end device further includes a control device connected to the receiver 240 and the transmitter 230. Specifically, the control device may include a controller, a signal distributor and a signal receiver, the signal distributor is connected to the transmitter in each of the RF transceiver devices 200, the signal receiver is connected to the receiver in each of the RF transceiver devices 200, and the control device is connected to the signal distributor and the signal receiver. The control device can particularly adopts MCU (Micro Control Unit). By controlling the signal distributor and the signal receiver to distribute and receive signals, the communication reliability of the antenna system is improved.

In the foregoing high gain RF front end apparatus, the antenna device 100 includes a plurality of stacked antenna array layers, a number of RF transceiver devices 200 is a two or more, and each of the RF transceiver devices is respectively connected to a corresponding antenna array layer to form a plurality of signal transceiver channels. By designing the antenna device as a three-dimensional array structure, the high gain RF front end device can form a vertical beam, thereby improving the overall gain of the antenna and improving the communication reliability compared with the conventional antenna system.

The foregoing respective technical features involved in the respective embodiments can be combined arbitrarily, for brevity, not all possible combinations of the respective technical features in the foregoing embodiments are described, however, to the extent they have no collision with each other, the combination of the respective technical features shall be considered to be within the scope of the description.

The foregoing implementations are merely specific embodiments of the present disclosure, and are not intended to limit the protection scope of the present disclosure. It should be noted that any variation or replacement readily figured out by persons skilled in the art within the technical scope disclosed in the present disclosure shall all fall into the protection scope of the present disclosure. Therefore, the protection scope of the present disclosure shall be object to the protection scope of the claims.

## Claims

1. A high gain RF front end apparatus, comprising:
an antenna device comprising a plurality of stacked antenna array layers;
a plurality of RF transceiver devices, each of the RF transceiver devices comprising a filter, a circulator, a receiver, and a transmitter, the antenna array layer being connected to the filter, the filter being connected to the circulator by an optical fiber,
and the circulator being connected to the receiver and the transmitter respectively by an optical fiber; and each of the RF transceivers is connected to a corresponding antenna array layer.

2. The high gain RF front end apparatus according to claim 1, wherein the antenna array layer comprises a substrate and an antenna array, the antenna array is disposed on the substrate and connected to the filter.

3. The high gain RF front end apparatus according to claim 2, wherein the antenna array is a dual polarization planar array.

4. The high gain RF front end apparatus according to claim 3, wherein the dual polarization planar array comprises a plurality of dual polarization oscillators, the dual polarization oscillators are arranged orthogonally with positive and negative polarization of 45 degrees.

5. The high gain RF front end apparatus according to claim 4, wherein the antenna array layer further comprises a combiner, each dual polarization oscillator in the antenna array is connected to the filter in the corresponding RF transceiver device by the combiner.

6. The high gain RF front end apparatus according to claim 2, further comprising a fixing base, wherein the substrate is latched and fixed to the fixing base.

7. The high gain RF front end apparatus according to claim 2, wherein the RF transceiver device further comprises a low noise amplifier and a power amplifier, the circulator is connected to the low-noise amplifier by an optical fiber, the low-noise amplifier is connected to the receiver by an optical fiber, the circulator is connected to the power amplifier by an optical fiber, and the power amplifier is connected to the transmitter by an optical fiber.

8. The high gain RF front end apparatus according to claim 1, wherein further comprising a control device connected to the receiver and the transmitter in each of the RF transceiver devices.

9. The high gain RF front end apparatus according to claim 8, wherein the control device comprises a controller, a signal distributor, and a signal receiver, the signal distributor being connected to the transmitter in each of the RF transceiver devices, the signal receiver being connected to the receiver in each of the RF transceiver devices, and the controller being connected to the signal distributor and the signal receiver.

10. The high gain RF front end apparatus according to any one of claims 1 to 9, wherein the antenna array layer is connected to the filter by an RF jumper.
